# EUROPÄISCHE PATENTSCHRIFT

(11) **EP 0 445 904 B1**
(45) Veröffentlichungstag und Bekanntmachung des Hinweises auf die Patenterteilung: **28.09.1994**
(21) Anmeldenummer: 91250063.4
(22) Anmeldetag: 08.03.1991
(51) Int. Cl.: B21C 37/06, F16L 9/04, F02M 55/02

(54) **Verfahren zur Herstellung eines metallischen, dickwandigen Hochdruckrohres**
Method of manufacturing a thick-walled high-pressure metal tube
Procédé de fabrication d'un tube métallique à paroi épaisse pour haute pression

(30) Priorität: 08.03.1990 DE 4007737; 21.02.1991 DE 4105701
(43) Veröffentlichungstag der Anmeldung: 11.09.1991
(73) Patentinhaber: MANNESMANN Aktiengesellschaft, 40027 Düsseldorf (DE)
(72) Erfinder: Lenze, Reinhard, W-4811 Oerlinghausen (DE)
(74) Vertreter: Meissner, Peter E., Dipl.-Ing.

(56) Entgegenhaltungen:
- DE-A- 2 501 156
- DE-A- 4 003 384
- FR-A- 2 585 269
- US-A- 3 863 328
- US-A- 4 070 209

## Beschreibung

Dieselmotoren werden in vielfältiger Weise als Antriebsaggregat für Kraftfahrzeuge und Schiffe oder zum Antrieb von Generatoren, Pumpen oder dergleichen verwendet. Die Kraftstoffzufuhr zu den einzelnen Zylindern erfolgt über eine Pumpe, wobei Drücke bis zu 1000 bar erreicht werden und es Bestrebungen gibt, den Einspritzdruck noch weiter heraufzusetzen, um damit den Rußpartikelanteil im Abgasstrom zu reduzieren. Die Verbindung von der Einspritzpumpe zu den einzelnen Zylindern erfolgt über freiliegende Rohrleitungen, die einem hohen und pulsierenden Innendruck ausgesetzt sind. Die Rohre sind zum Abfangen des statischen Druckes entsprechend dickwandig ausgelegt mit einem D/s-Verhältnis im Bereich von 2,4 bis 3,6. Außerdem weisen sie im Hinblick auf eine hohe Dauerwechselfestigkeit eine möglichst glatte und fehlerfreie Innenoberfläche auf. Des weiteren darf der Innendurchmesser über die Länge gesehen nur in einem engen Toleranzbereich schwanken, da dies von Bedeutung ist für die Gleichmäßigkeit der Strömungsverhältnisse, um eine optimale Anpassung an die theoretischen Auslegungsdaten zu erreichen.

Dies gilt in gleicher Weise auch für die Anforderung an eine möglichst kerbenfreie Innenoberfläche. Der schwellende Innendruck mit Amplitudenschwankungen von 30 bis 1500 bar und einer Frequenz von 10-50 Hz bedeuten für das Rohr eine hohe Wechselbeanspruchung, die dem statischen Innendruck überlagert ist, wobei die daraus resultierende Gesamtspannung zu einer Schädigung und letztendlich zum Bruch eines Rohres führen können. Das Versagen einer solchen Leitung hängt im starken Maße auch davon ab, welche Größe bzw. Orientierung die vom Herstellungsprozeß herrührenden Fehler im Oberflächenbereich haben und wie häufig sie auftreten. Als besonders kritisch werden in diesem Zusammenhang dabei Kaltzüge ohne Innenwerkzeug, die auch als Hohlzüge bezeichnet werden, am Ende des Herstellprozesses angesehen. Untersuchungen haben ergeben, daß bei Hohlzügen, bei denen die Durchmesserreduktion der bei weitem überwiegende Anteil der Gesamtverformung ist und die Wanddicke nahezu konstant bleibt, der im Rohr verbliebene Fehler an der Innenoberfläche von den vorhergehenden Umformschritten absolut gesehen größer wird. Mit jedem weiteren nachfolgenden Hohlzug verschlechtert sich die Innenoberfläche in Richtung eines zunehmenden Fehlers im absoluten Maßstab. Außerdem nimmt infolge der nicht abgestützten Innenoberfläche beim Hohlzug die Schwankungsbreite des Innendurchmessers zu.

Diese Schwierigkeiten kann man z. B. dadurch umgehen, daß man solche Rohre über Kaltpilgern herstellt, ein Verfahren, bei dem die Wanddickenreduktion einen überwiegenden Anteil an der Gesamtverformung hat, was sich günstig im Hinblick auf die Glättung der Innenoberfläche und die Gleichmäßigkeit des Innendurchmessers auswirkt. Nachteilig dabei ist, daß die Meterleistung beim Kaltpilgern um ein Vielfaches geringer ist im Vergleich zum Kaltziehen und Rohre mit sehr kleinem Durchmesser, d. h. kleiner 10 mm über Kaltpilgern nicht mehr oder nur sehr aufwendig herstellbar sind.

Aus der DE-OS 25 01 156 ist ein Verfahren zur Herstellung eines mehrschichtigen Druckrohres bekannt, bei dem zunächst die metallischen Vorrohre teleskopartig ineinandergesteckt und anschließend über Kaltziehen radial zusammengedrückt werden, bis die einzelnen Rohrteile fest miteinander verbunden sind. Angaben zur Herstellung der Vorrohre sowie Einzelheiten über das Kaltziehen des mehrschichtigen Druckrohres sind dieser Schrift nicht entnehmbar.

Ein weiterer Vorschlag zur Herstellung eines mehrschichtigen Rohres ist in der US-PS 4,125,924 offenbart. Der Anmeldungsgegenstand ist im Unterschied zur vorher genannten Schrift (DE-OS 25 01 156) auf die Herstellung von Ofenrollen gerichtet, wobei die Betonung auf der Verbindung zweier unterschiedlicher Werkstoffe, z. B. Eisen- und Nichteisenwerkstoff liegt. Bei dem vorgeschlagenen Verfahren werden zwei in den Abmessungen unterschiedliche Ausgangsrohre teleskopartig ineinandergeschoben und durch einen Hohlzug klangfest miteinander verbunden, wobei das innere Vorrohr vor dem Ineinanderschieben eine höherc Härte bzw. Festigkeit aufweist,als das äußere Vorrohr und die höhere Härte über einen Hohlzug erzeugt wird.

Aus der FR-A-25 85 269 ist ein Verfahren zur Herstellung von Rohren bekannt, bei dem zwei in den Querschnittsabmessungen unterschiedliche Rohre ineinandergesteckt und dann durch Ziehen verformt werden. Dabei erfolgt im wesentlichen eine Durchmesser- und Wanddickenreduzierung des Außenrohres und ein Aufpressen auf das sich nur wenig verformende Innenrohr. Anschließend ist hierbei noch eine Wärmebehandlung vorgesehen.

Aufgabe der Erfindung ist es, ein einfaches und kostengünstiges Verfahren zur Herstellung von Hochdruckrohren mit einem D/s-Verhältnis von 2,4 bis 3,6 anzugeben, die eine glatte Innenoberfläche und einen gleichmäßigen Innendurchmesserverlauf sowie eine gute Kaltverformbarkeit aufweisen und die einem pulsierenden Innendruck von gleich größer 1000 bar standhalten können.

Diese Aufgabe wird mit den im Anspruch 1 angegebenen Mitteln gelöst. Vorteilhafte Weiterbildungen ergeben sich aus den Unteransprüchen.

Versuche haben gezeigt, daß das bereits vorgeschlagene Hohlziehen zweier ineinandergeschobener Rohre nicht ausreichend ist, um einen ausreichenden innigen Verbund zwischen den beiden Rohren zu erzielen, um das so hergestellte Doppelwandrohr vergleichbar wie ein Einwandrohr zu biegen und zu stauchen, ohne daß irgendwelche Verschiebungen zwischen den beiden Rohren auftreten. Die dafür erforderliche innige Verklammerung wird erfindungsgemäß dadurch erreicht, daß das über ein teleskopartiges Ineinanderschieben kaltverfestigter Vorrohre hergestellte Doppelwandrohr zunächst wärmebehandelt und anschließend mindestens einmal kaltgezogen wird, wobei der nach der ersten Wärmebehandlung des Doppelwandrohres folgende Kaltzug ein Ziehen mit einem Innenwerkzeug ist. Dieser Prozeß führt dazu, daß an der Trennstelle zwischen den beiden Rohren mikroskopisch kleine Metallbrücken gebildet werden, die eine Relativverschiebung der beiden Rohre verhindern. An einem erfindungsgemäß hergestellten Doppelwandrohr wurde zur Bestätigung der festen Verklammerung versucht, mittels einer Zugprüfmaschine das innere Rohr aus dem ihn umhüllenden Außenrohr herauszuziehen. Dies gelang nicht, sondern das Rohr zerriß wie ein üblicher einwandiger Probestab.

Der Vorteil des erfindungsgemäßen Verfahrens ist darin zu sehen, daß das dünnwandige innere Vorrohr ausgehend von einer warmgefertigten Rohrluppe über eine Folge von Kaltzügen vorzugsweise mit einem Innenwerkzeug abgestreckt wird, wobei die Wanddickenreduktion einen hohen Anteil an der Gesamtverformung hat und mindestens 40 % vorzugsweise 50 % beträgt. Dies führt dazu, wie bereits schon in der Einleitung ausgeführt, daß die vom Warmherstellungsprozeß herrührenden Ungänzen im absoluten Maßstab verkleinert werden und die Innenoberfläche generell geglättet wird. Außerdem haben Messungen ergeben, daß die Schwankungsbreite des Innendurchmessers des inneren Rohres geringer ist als die eines vergleichbaren Einwandrohres. Vorteilhaft ist weiterhin, daß vom Rohrhersteller bereits vorhandene Anlagen genutzt werden können und Neuinvestitionen nicht erforderlich sind. Des weiteren sind auch beim Weiterverarbeiter bezüglich des Biegens und des Stauchens eines solchen Doppelwandrohres keinerlei Umstellungen weder maschinentechnischer noch verfahrenstechnischer Art erforderlich.

Die beiden teleskopartig ineinander zu schiebenden Vorrohre können einen unterschiedlichen Herstellungsprozeß durchlaufen, wobei es sich als günstig erwiesen hat, das äußere und das innere Vorrohr über Kaltziehen herzustellen und sie vor dem Ineinanderschieben in diesem Zustand zu belassen. Um die Bildung der Metallbrücken zwischen den beiden Rohren zu verstärken, wird die Differenz zwischen dem äußeren Durchmesser des inneren Vorrohres und dem inneren Durchmesser des äußeren Vorrohres klein gehalten und liegt zwischen 2/10 und 6/10 mm. Dabei müssen die beiden möglicherweise sich überlappenden Toleranzfelder des inneren und äußeren Vorrohres noch mit berücksichtigt werden. Damit das Ineinanderschieben problemlos möglich ist, empfiehlt es sich zumindest die Außenoberfläche des inneren Vorrohres leicht einzuölen. Anschließend werden die berührenden Oberflächen beider Vorrohre durch eine Wärmebehandlung unter Schutzgas aktiviert. Im Unterschied zum vorgeschlagenen Hohlzug der beiden ineinandergeschobenen Vorrohre ist der erste Kaltzug nach der Wärmebehandlung ein Ziehen mit Innenwerkzeug. Dadurch wird die beim Ziehen auftretende Flächenpressung zwischen den beiden ineinandergeschobenen Vorrohren weiter erhöht und die Verklammerung dementsprechend verbessert. Durch entsprechende Abstimmung der Ziehparameter kann man erreichen, daß die Relativbewegung zwischen den beiden Vorrohren während des Ziehens nahezu Null ist und das jeweilige Rauheitsprofil der einen Oberfläche in das des anderen Vorrohres gepreßt wird. Demgegenüber ergibt sich beim Ziehen ohne Innenwerkzeug der Effekt, daß die Relativbewegung sehr groß ist und die Rauheitsspitzen umgebogen, wenn nicht sogar abgeschert werden.

Vorzugsweise werden die beiden Vorrohre aus dem gleichen Werkstoff hergestellt, es sind aber auch unterschiedliche Werkstoffpaarungen vorstellbar. So könnte z. B. im Hinblick auf eine Optimierung der Wanddickenverhältnisse und Umformbedingungen ein unlegierter mit einem mittellegierten oder sogar hochlegierten Stahl gepaart werden. Dabei ist es denkbar, daß das aus einem hochlegierten Stahl hergestellte äußere Rohr gleichzeitig auch Korrosionsschutzaufgaben übernimmt. Bei der erforderlichen Wärmebehandlung zwischen den Kaltzügen, sei es mit oder ohne Innenwerkzeug handelt es sich um ein Normalglühen unter Schutzgas im Temperaturbereich zwischen 900 - 940 Grad Celsius, vorzugsweise 920 Grad Celsius, wobei das Schutzgas verwendet wird, um eine Randentkohlung weitgehend zu unterdrücken. Auch die Endwärmebehandlung des fertigen Doppelwandrohres ist ein Normalglühen unter Schutzgas in dem angegebenen Temperaturbereich.

Als Beispiel für die erfindungsgemäße Fertigung eines Doppelwandrohres ist der Fertigungsablauf eines Rohres der Abmessung 6 x 1,875 mm angegeben (alle Angaben in mm). Für dieses Beispiel wird für das äußere und das innere Vorrohr der gleiche Werkstoff, z. B. ein unlegierter C-Stahl mit der Gütebezeichnung S30 verwendet.

| | Rohr A (Außenrohr) | Rohr B (Innenrohr) |
|---|---|---|
| Ausgangsabmessung | 38 x 4 | 33,7 x 2,9 |
| Kaltziehen (mit Innenwerkzeug) | 33 x 3 | 26,2 x 2,05 |
| Glühen | 900°C - 940°C/Schutzgas | - |
| Kaltziehen (mit Innenwerkzeug) | 26,5 x 2,2 | 25,1 x 1,5 |
| Kaltziehen (mit Innenwerkzeug) | 25,6 x 1,75 | - |
| Kaltziehen (mit Innenwerkzeug) | 20 x 1,65 | 20 x 1,35 |
| Glühen | 900°C - 940°C/Schutzgas | 900°C - 940°C/Schutzgas |
| Kaltziehen (mit Innenwerkzeug) | - | 16,5 - 1,05 |
| Glühen | - | 900°C - 940°C/Schutzgas |
| Kaltziehen (mit Innenwerkzeug) | - | 13,5 - 0,8 |
| Kaltziehen (ohne Innenwerkzeug) Richten und Teilen | 15,5 x 1,7 | 11,6 x 0,85 |

### Doppelwandrohr

Rohre ineinanderschieben
Glühen 900°C - 940°C /Schutzgas
Kaltziehen (mit Innenwerkzeug) 11,1 x 2,35
Glühen 900°C - 940°C /Schutzgas
Kaltziehen (mit Innenwerkzeug) 8 x 2,0
Glühen 900°C - 940°C /Schutzgas
Kaltziehen (ohne Innenwerkzeug) 6 x 1,875
Richten und Teilen
Endwärmebehandlung 900°C - 940°C /Schutzgas
Adjustieren
Diese erfindungsgemäß hergestellten Doppelwandrohre verhielten sich bei der Weiterverarbeitung bei Zerreiß- und Stauchversuchen wie ein einwandiges Rohr. Schwellversuche mit Drücken bis zu 1200 bar zeigten die Überlegenheit dieser Rohre gegenüber normal den mit einem hohen Anteil an Hohlzügen hergestellten einwandigen Rohren. Das Beispiel zeigt aber auch, daß es schwierig ist, bei einer gegebenen Ziehanlagenausstattung für eine bestimmte Ziehfolge ganz auf ein Ziehen ohne Innenwerkzeug zu verzichten. Wesentlich ist nur, daß wie eingangs schon darauf hingewiesen, dieser Anteil sehr gering sein sollte, wobei dies inbesondere für das innere Vorrohr und auch für das Doppelwandrohr gilt. Aus diesem Grunde wird vorgeschlagen, den letzten Kaltzug des Doppelwandrohres vor der Endwärmebehandlung als Glättzug auszubilden. Dies bedeutet, daß zwar die Wanddickenreduzierung nur noch gering ist, aber eine Abstützung durch das Innenwerkzeug immer von Vorteil für die Glättung der Innenoberfläche und die Gleichmäßigkeit des Innendurchmessers ist.

Die Erfindung wird nachstehend anhand einer schematischen Zeichnung ergänzend beschrieben.

Es zeigen:

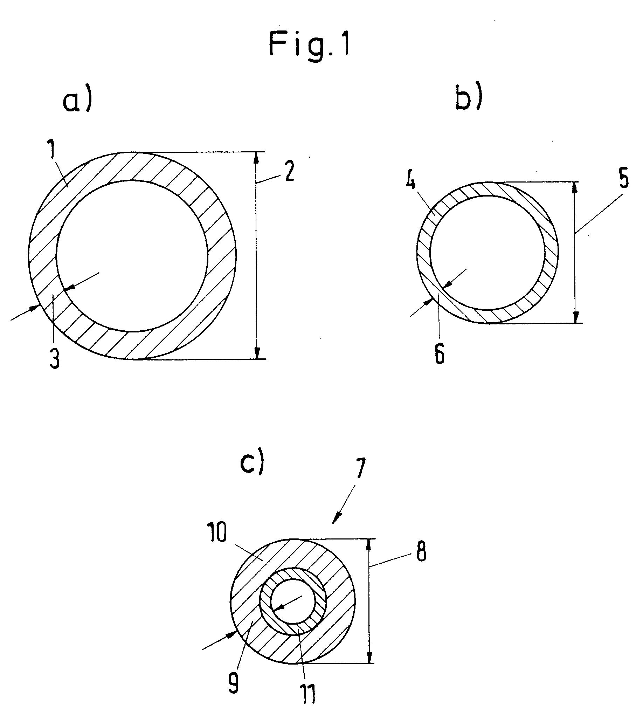

- Figur 1a: im Querschnitt das äußere Vorrohr vor dem Zusammenschieben
- Figur 1b: im Querschnitt das innere Vorrohr vor dem Zusammenschieben
- Figur 1c: im Querschnitt das fertige Doppelwand-Hochdruckrohr
Bezug nehmend auf das vorher genannte Beispiel zeigt Figur 1a im Querschnitt das über eine Abfolge von Kaltzügen und dazwischenliegenden Wärmebehandlungen hergestellte äußere Vorrohr 1 mit einem äußeren Durchmesser 2 von beispielsweise 15,5 mm und einer Wanddicke von 1,7 mm. In Figur 1b ist im gleichen Querschnitt das innere Vorrohr 4 dargestellt, das ebenfalls über eine Abfolge von Kaltzügen und dazwischenliegenden Wärmebehandlungen hergestellt wurde. In diesem Beispiel hat es einen äußeren Durchmesser 5 von 11,6 mm und eine Wanddicke 6 von 0,85 mm. Die sich ergebende Differenz des Durchmessers zwischen innerem 4 und äußerem 1 Vorrohr beträgt bei diesem Zahlenbeispiel 0,5 mm und liegt damit ebenfalls in dem angegebenen Bereich von 2 bis 6/10 mm. Figur 1c zeigt ebenfalls im Querschnitt das erfindungsgemäß hergestellte Doppelwand-Hochdruckrohr 7. Es hat einen äußeren Durchmesser 8 von 6 mm und eine Gesamtwanddicke 9 von 1,875 mm. Diese Gesamtwanddicke 9 teilt sich auf in 1,25 mm für das äußere Rohr 10 und 0,625 mm für das innere Rohr 11. Damit beträgt der Anteil der Wanddicke des inneren Rohres 10 an der Gesamtwanddicke 9 etwa ein Drittel.

## Patentansprüche

1. Verfahren zur Herstellung eines metallischen, dickwandigen Hochdruckrohres, bei dem zunächst zwei in den Querschnittsabmessungen unterschiedliche Vorrohre teleskopartig ineinandergesteckt und sodann durch Kaltziehen radial zusammengedrückt werden, wobei
die Vorrohre ausgehend von warmgefertigten Rohrluppen über eine Abfolge von Kaltzügen mit Zwischenwärmebehandlungen hergestellt werden, wobei die Umformung vorzugsweise durch ein Ziehen mit Innenwerkzeug erfolgt, bei der die Wanddickenreduzierung insbesondere des Innenrohres einen hohen Anteil an der jeweiligen Gesamtverformung hat,
daß die Vorrohre im kaltverfestigten Zustand mit geringem Spiel ineinandergeschoben werden und das so erzeugte Doppelwandrohr zunächst wärmebehandelt und anschließend mindestens einmal kaltgezogen wird und nach dem letzten Kaltzug eine Endwärmebehandlung erfolgt, wobei der nach der ersten Wärmebehandlung des erzeugten Doppelwandrohres folgende erste Kaltzug ein Ziehen mit einem Innenwerkzeug ist.

2. Verfahren nach Anspruch 1,
**dadurch gekennzeichnet**
daß die jeweilige Wärmebehandlung ein Normalglühen unter Schutzgasatmosphäre ist.

3. Verfahren nach Anspruch 1,
**dadurch gekennzeichnet,**
daß nach der ersten Wärmebehandlung des erzeugten Doppelwandrohres mindestens ein zweifaches Kaltziehen mit Innenwerkzeug und einer jeweiligen Zwischenwärmebehandlung folgt.

4. Verfahren nach Anspruch 3,
**dadurch gekennzeichnet,**
daß der letzte Kaltzug ein Glättzug ist.

5. Verfahren nach Anspruch 3,
**dadurch gekennzeichnet,**
daß der letzte Kaltzug ein Ziehen ohne Innenwerkzeug ist.

6. Verfahren nach Anspruch 1,
**dadurch gekennzeichnet,**
daß bei der Herstellung des inneren Vorrohres die Wanddickenreduzierung einen Anteil von mindestens 40 % vorzugsweise von 50 % an der jeweiligen Gesamtumformung hat.

7. Verfahren nach Anspruch 1,
**dadurch gekennzeichnet,**
daß der Grad der Gesamtumformung des inneren Vorrohres immer größer ist als der des äußeren Vorrohres und mindestens 85 % vorzugsweise mehr als 90 % beträgt.

## Claims

1. A method for producing a metallic, thick-walled high-pressure tube, in which first of all two preliminary tubes which differ in their cross-sectional dimensions are inserted into one another in telescope-like manner and then are radially compressed together by cold-drawing,
the preliminary tubes being produced starting from hot-shaped tube blanks by means of a sequence of cold-drawing operations with intermediate heat treatments, the shaping preferably taking place by drawing with an internal tool, in which the reduction in wall thickness in particular of the inner tube has a high proportion of the respective total deformation,
the preliminary tubes are inserted into one another in the cold-hardened state with low play, and the double-walled tube thus formed is first heat-treated and then is cold-drawn at least once and after the final cold-drawing operation a final heat treatment takes place, with the first cold-drawing operation following after the first heat treatment of the double-walled tube produced being drawing with an internal tool.

2. A method according to Claim 1, characterised in that the respective heat treatment is normalising under a protective gas atmosphere.

3. A method according to Claim 1, characterised in that after the first heat treatment of the double-walled tube which has been produced at least double cold-drawing with internal tool and an intermediate heat treatment in each case takes place.

4. A method according to Claim 3, characterised in that the final cold-drawing operation is a smoothing drawing operation.

5. A method according to Claim 3, characterised in that the final cold-drawing operation is drawing without an internal tool.

6. A method according to Claim 1, characterised in that in the production of the inner preliminary tube the wall thickness reduction has a proportion of at least 40%, preferably 50%, of the respective total deformation.

7. A method according to Claim 1, characterised in that the degree of total deformation of the inner preliminary tube is always greater than that of the outer preliminary tube and is at least 85%, preferably more than 90%.

## Revendications

1. Procédé de fabrication d'un tube métallique à paroi épaisse pour haute pression, dans lequel tout d'abord deux pré-tubes de section transversale de dimensions différentes sont enfoncés télescopiquement l'un dans l'autre et ensuite assemblés radialement sous pression par étirage à froid, les pré-tubes provenant de barreaux tubulaires préparés à chaud sont fabriqués dans une succession d'étirages à froid avec traitement thermique intermédiaire, la déformation s'effectuant de préférence par étirage avec outil intérieur, dans lequel la réduction de l'épaisseur de paroi, en particulier du tube intérieur, constitue une partie importante de chaque déformation globale, caractérisé en ce que les pré-tubes à l'état solidifié à froid sont enfoncés l'un dans l'autre à faible jeu, le tube à double paroi étant ainsi créé étant tout d'abord traité thermiquement et ensuite étiré à froid au moins une fois, et après le dernier étirage à froid s'effectue un traitement thermique final, le premier étirage à froid suivant le premier traitement thermique du tube à double paroi créé étant un étirage avec un outil intérieur.

2. Procédé selon la revendication 1, caractérisé en ce que chaque traitement thermique est un recuit de normalisation sous atmosphère de gaz protecteur.

3. Procédé selon la revendication 1, caractérisé en ce qu'après le premier traitement thermique du tube à double paroi créé suit au moins un double étirage à froid avec outil intérieur et chaque fois un traitement thermique intermédiaire.

4. Procédé selon la revendication 3, caractérisé en ce que le dernier étirage à froid est un étirage de lissage.

5. Procédé selon la revendication 3, caractérisé en ce que le dernier étirage à froid est un étirage sans outil intérieur.

6. Procédé selon la revendication 1, caractérisé en ce que lors de la fabrication du pré-tube intérieur, la réduction de l'épaisseur de paroi constitue une fraction valant au moins 40%, de préférence 50%, de chaque déformation globale.

7. Procédé selon la revendication 1, caractérisé en ce que le degré de déformation globale du pré-tube intérieur est toujours plus grand que celui du pré-tube extérieur, et vaut au moins 85%_{,} de préférence plus de 90%.
